# EUROPEAN PATENT APPLICATION

(11) **EP 4 283 987 A1**
(43) Date of publication of application: **29.11.2023**
(21) Application number: 22759801.8
(22) Date of filing: 25.02.2022
(51) Int. Cl.: H04N 13/356, B60R 11/02, G02B 30/26, H04N 7/18, H04N 13/305, H04N 13/363, H04N 13/366

(54) **IMAGE DISPLAY DEVICE**

(30) Priority: 26.02.2021 JP 2021030795
(71) Applicant: KYOCERA CORPORATION, Kyoto-shi, Kyoto 612-8501 (JP)
(72) Inventor: SHINTANI, Takeshi, Kyoto-shi, Kyoto 612-8501 (JP); SADAMOTO, Hiromichi, Kyoto-shi, Kyoto 612-8501 (JP); NAKAJIMA, Yasushi, Kyoto-shi, Kyoto 612-8501 (JP)
(74) Representative: Viering, Jentschura & Partner mbB Patent- und Rechtsanwälte
(86) International application number: PCT/JP2022/007891
(87) International publication number: WO 2022/181767

(57) **Abstract**

An image display device includes an exterior camera that captures an image of an area around a vehicle, a viewpoint detector that detects positions of viewpoints of a driver in a driver seat of the vehicle and outputs viewpoint position information indicating the positions of the detected viewpoints, a first image processor that generates, based on image data about an area corresponding to a shielding portion to block a view of the driver viewing outside at the positions indicated by the viewpoint position information, image data for a left eye about the area corresponding to the shielding portion, a second image processor that generates, based on image data for a right eye about the area corresponding to the shielding portion, image data about the area corresponding to the shielding portion, and a display device installable on the vehicle to display a parallax image including a first image and a second image on the shielding portion. Second image data is uniform monochromatic display data for a specific shielding portion of the shielding portion.

## Description

### TECHNICAL FIELD

The present disclosure relates to an image display device that displays captured images of an area around a vehicle on shielding portions such as pillars being blind spots of a driver and causes the driver to perceive the captured images as being connected to outside scenes.

### BACKGROUND OF INVENTION

A known technique is described in, for example, Patent Literature 1.

### CITATION LIST

### PATENT LITERATURE

Patent Literature 1: Japanese Unexamined Patent Application Publication No. 2006-44596

### SUMMARY

In an aspect of the present disclosure, an image display device includes an imager, a first image processor, a second image processor, and an image display. The imager captures an image of an area around a vehicle to obtain image data and outputs the image data. The first image processor generates, based on a portion of the image data about an area corresponding to a shielding portion to block a view of an observer seated on a seat of the vehicle, first image data of a first image of the area corresponding to the shielding portion. The first image data is viewable with one of a left eye or a right eye. The second image processor generates, based on the portion of the image data about the area corresponding to the shielding portion, second image data of a second image of the area corresponding to the shielding portion. The second image data is viewable with the other of the left eye or the right eye. The image display is installable on the vehicle to display a parallax image including the first image and the second image on the shielding portion. The second image data is uniform monochromatic display data for a specific shielding portion of the shielding portion.

### BRIEF DESCRIPTION OF THE DRAWINGS

FIG. 1 is a schematic plan view of an example image display device according to an embodiment of the present disclosure.
FIG. 2 is a partially enlarged cross-sectional view of a retroreflective screen and a diffuser included in the image display device.
FIG. 3 is a schematic plan view of a vehicle incorporating the image display device.
FIG. 4 is a schematic side view of the vehicle incorporating the image display device.
FIG. 5 is a block diagram of the image display device.
FIG. 6 is a flowchart of the operation of a controller.
FIG. 7 is a diagram of a known example display of a display image on a shielding portion viewed with a left eye.
FIG. 8 is a diagram of a known example display of a display image on the shielding portion viewed with a right eye.
FIG. 9 is a diagram of a comparative example display of a parallax image including a second image as a non-monochromatic image being displayed on the shielding portion.
FIG. 10 is a diagram of an example display of a parallax image including the second image as a monochromatic image being displayed on the shielding portion by the image display device according to the embodiment.
FIG. 11 is a schematic diagram of a backseat display device being attached.
FIG. 12 is a schematic diagram of a display device including a parallax barrier according to another embodiment.
FIG. 13 is a schematic diagram of a display device including a lenticular lens according to another embodiment.

### DESCRIPTION OF EMBODIMENTS

The objects, features, and advantages of the present disclosure will become more apparent from the following detailed description and the drawings.

A known transparency technique including a retroreflective projection that forms the basis of an image display device according to one or more embodiments of the present disclosure can cause an observer to perceive an image as being viewed through a transparent object. With this transparency technique, a computer generates a left-eye image to be perceived with a left eye of the observer and a right-eye image to be perceived with a right eye of the observer based on images captured with cameras located outside a vehicle. The left-eye image and the right-eye image are projected onto a shielding portion of the vehicle such as a pillar or a door, which blocks a line of sight of the observer, to cause the driver as the observer to perceive the image of the outside scene captured with the cameras as a three-dimensional image. The driver can thus perceive a portion as a blind spot as being transparent and as being connected to outside scenes (refer to, for example, Patent Literature 1).

With the known technique described in Patent Literature 1, a left-eye image and a right-eye image projected and displayed on a small shielding portion such as a pillar may have a large difference between them. Such a large difference can cause, for example, the left eye to view the right-eye image. The shielding portion is thus perceived as being disconnected from outside scenes viewed through light transmissive areas other than the shielding portion, such as a vehicle window and a windshield adjacent to the shielding portion.

An image display device according to one or more embodiments of the present disclosure will now be described with reference to the accompanying drawings.

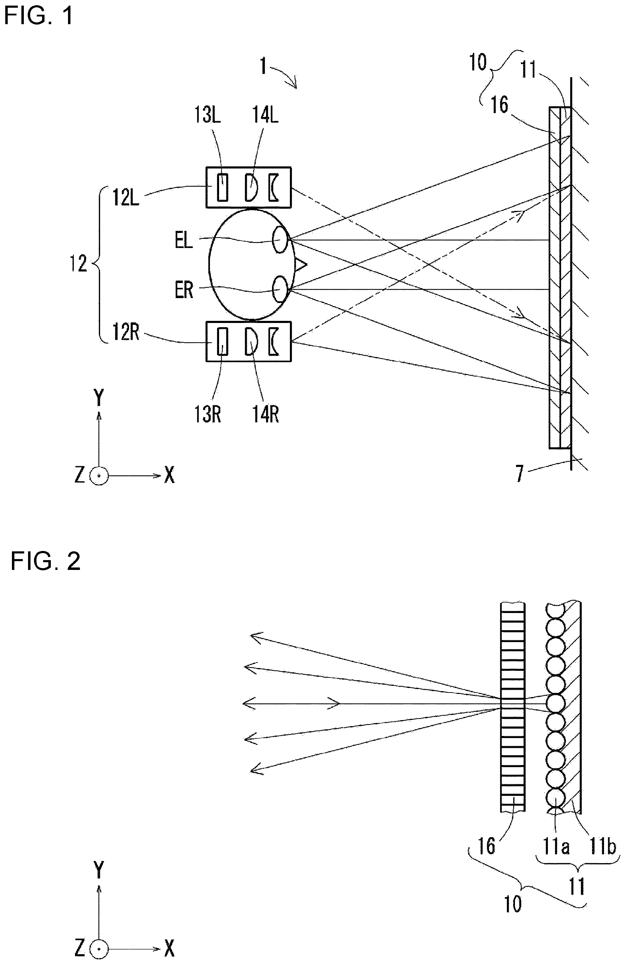

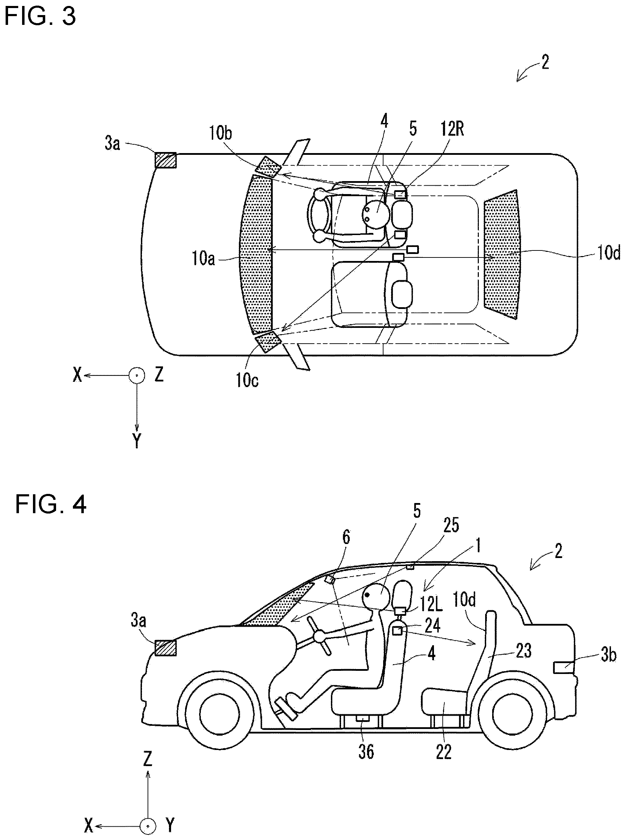

FIG. 1 is a schematic plan view of an example image display device 1 according to an embodiment of the present disclosure. FIG. 2 is a partially enlarged cross-sectional view of a retroreflective screen 11 and a diffuser 16 included in the image display device 1. FIG. 3 is a schematic plan view of a vehicle 2 incorporating the image display device 1. FIG. 4 is a schematic side view of the vehicle 2 incorporating the image display device 1.

In the present embodiment, the image display device 1 includes exterior cameras 3a and 3b as imagers to capture images of scenes around the vehicle 2 to obtain image data and output the image data, an interior camera 6 as a viewpoint detector to detect the positions of a left eye EL and a right eye ER as viewpoints of a driver 5 as an observer seated on, for example, a driver seat 4 as a seat of the vehicle 2 and to output viewpoint position information indicating the positions of the detected left eye EL and the right eye ER as space coordinates, a first image processor 8 to generate a first image viewable with one of the left eye EL or the right eye ER based on a portion of the image data, which is output from the front exterior camera 3a and the rear exterior camera 3b, about an area corresponding to the shielding portion 7 to block fields of view of the left eye EL and the right eye ER viewing outside at the positions indicated by the viewpoint position information, a second image processor 9 to generate a second image viewable with the other of the left eye EL or the right eye ER and having parallax with the first image based on the portion of the image data about the area corresponding to the shielding portion 7, display devices 10 as image displays installable on the vehicle 2 to display a parallax image including the first image and the second image on the corresponding shielding portion 7, and projectors. Examples of the shielding portion 7 in the vehicle 2 include a dashboard, doors, pillars, and backseats. The images captured with the exterior cameras 3a and 3b and subjected to image processing are projected onto such shielding portions 7 and can thus be perceived as being connected to the outside scenes.

The display devices 10 each include the retroreflective screen 11 and the diffuser 16 bonded to and stacked on a surface of the retroreflective screen 11 facing the observer of the retroreflective screen 11. The display devices 10 include a dashboard display device 10a on a dashboard, a right-side pillar display device 10b on a right side pillar, a left-side pillar display device 10c on a left side pillar, and a backseat display device 10d on a backrest 23 in a backseat 22.

The display devices 10 each include, on the respective shielding portions 7, the retroreflective screen 11 and the diffuser 16 stacked on the surface of the retroreflective screen 11 facing the observer of the retroreflective screen 11. The projectors each include a right-eye projector to project a first image onto the retroreflective screen 11 and a left-eye projector to project a second image onto the retroreflective screen 11. The projectors thus include a right-side pillar projector for the right-eye to project a first image onto the right-side pillar display device 10b bonded to a right side pillar 40 and a right-side pillar projector for the left-eye to project a second image onto the right-side pillar display device 10b bonded to a right side pillar 40. The projectors also include a dashboard projector for the right-eye to project a first image onto the dashboard display device 10a bonded to the dashboard and a dashboard projector for the left-eye to project a second image onto the dashboard display device 10a. The display devices 10a, 10b, 10c, and 10d are flexible and curved in conformance with irregularities on the corresponding shielding portions 7. In this state, the display devices 10a, 10b, 10c, and 10d are bonded to the corresponding shielding portions 7 with, for example, an adhesive. All the projectors have the same structure. Thus, the right-side pillar projector 12 will now be described in detail as an example.

The right-side pillar projector 12 includes a right-eye projector 12R to project a right-eye image and a left-eye projector 12L to project a left-eye image. The right-eye projector 12R includes a liquid crystal display device 13R to display a first image and a first projection lens 14R through which the image light of the first image emitted from the liquid crystal display device 13R is projected onto the retroreflective screen 11. The left-eye projector 12L includes a liquid crystal display device 13L to display a second image and a second projection lens 14L through which the image light of the second image emitted from the liquid crystal display device 13L is projected onto the retroreflective screen 11. The liquid crystal display devices 13R and 13L each include a transmissive liquid crystal display element and a backlight to emit light to the back surface of the liquid crystal display element. The projection lenses 14R and 14L including the respective combinations of multiple lenses cause a first image and a second image emitted through the respective liquid crystal display elements to have parallax between them and to form an image on the retroreflective screen 11. The driver 5 is the observer in the above example. However, an occupant seated on a passenger seat may be the observer. For the occupant as the observer, the right-eye projector 12R and the left-eye projector 12L in the display device 10 are located adjacent to the passenger seat.

A backseat projector 24 and a dashboard projector 25 have the same or similar structure as the right-side pillar projector 12. The backseat projector 24 projects a portion of image data captured with the rear exterior camera 3b corresponding to an area with its view blocked by the backseat onto the display device 10d. The dashboard projector 25 projects a portion of image data captured with the front exterior camera 3a corresponding to an area with its view blocked by the dashboard onto the dashboard display device 10a. Thus, the driver 5 directly viewing the shielding portions 7 can perceive the shielding portions 7 as being transparent.

The dashboard projector 25 may be located at, for example, the center of the ceiling of the vehicle 2. The backseat projector 24 may be located between, for example, a backrest in the driver seat 4 and a backrest in the passenger seat and be attached to an upper portion of the backrest in the driver seat 4.

The retroreflective screen 11 is retroreflective and reflects all incident light in the incident direction. The image light of the first image emitted through the first projection lens 14R is reflected from the retroreflective screen 11 to return to the first projection lens 14R. The image light of the second image emitted through the second projection lens 14L is reflected from the retroreflective screen 11 to return to the second projection lens 14L. The image light of the first image and the image light of the second image overlapping each other on the retroreflective screen 11 are separately perceived at the position of the observer. The diffuser 16 is located on the surface of the retroreflective screen 11 facing the observer. The diffuser 16 may have diffusion capability to cause light to be reflected to the observer along the line of sight of the observer from the retroreflective screen 11, rather than to be reflected to the projectors 12, 24, or 25. With, for example, the projectors 12, 24, and 25 located above the observer, the diffuser 16 may be an anisotropic diffuser having high vertical diffusion capability and low lateral diffusion capability. With low lateral diffusion capability, the right-eye image does not enter the left eye. Thus, no interference occurs between the images, providing clear three-dimensional images.

The diffuser 16 is stacked on the surface of the retroreflective screen 11 facing the observer. The diffuser 16 may be a holographic optical element. The diffuser 16 may be bonded to the reflecting surface of the retroreflective screen 11. The diffuser 16 may spread light from the first projection lens 14R and light from the second projection lens 14L. The retroreflective screen 11 includes multiple tiny glass beads 11a each with a diameter of about 20 to 100 µm inclusive arranged planarly and bonded to a reflective film 11b. The image light projected onto the retroreflective screen 11 enters each glass bead 11a, is refracted at the surface of the glass bead 11a, reaches the back surface of the glass bead 11a on the reflective film 11b, and is reflected from the reflective film 11b. The light reflected from the reflective film 11b is refracted again at the back surface of the glass bead 11a, reaches the surface of the glass bead 11a, and travels along a light path parallel to the incident light at a small distance of less than or equal to the diameter of the glass bead 11a from the incident path of the incident light. In this manner, retroreflection is performed.

The diffuser 16 has a light diffusion direction in Y-direction (lateral direction for the driver 5) different from a light diffusion direction in Z-direction (vertical direction for the driver 5). The image light of the first image emitted through the projection lens 14R entering the retroreflective screen 11 is emitted in its incident direction. The image light of the second image emitted through the projection lens 14L entering the retroreflective screen 11 is emitted in its incident direction. In this case, the projection lenses 14R and 14L having the same optical path length establish a conjugate relationship, thus allowing observation of a clear image. With the diffuser 16 located on the retroreflective screen 11, the light emitted in a retroreflective manner is diffused. This can establish the conjugate relationships at positions other than the positions of the projection lenses 14R and 14L, thus providing a clear image at the position of the observer.

The liquid crystal display devices 13R and 13L include transmissive liquid crystal display elements. The transmissive liquid crystal display elements deflect source light from the backlight to emit the image light of the first image to the right eye ER of the observer and to emit the image light of the second image to the left eye EL of the observer. The two images displayed on the liquid crystal display devices 13R and 13L having parallax between them can provide a three-dimensional parallax image. The liquid crystal display devices may be replaced with light-emitting diode (LED) display devices.

Through the projection lens 14R, the image light of the first image emitted from the liquid crystal display device 13R is projected onto the retroreflective screen 11. Through the projection lens 14L, the image light of the second image emitted from the liquid crystal display device 13L is projected onto the retroreflective screen 11. These projected images form an image on the retroreflective screen 11. The projected images on the retroreflective screen 11 are enlarged images displayed on the liquid crystal display devices 13R and 13L. The images cover a wide area. The left-eye projector 12L includes an exit pupil leveled with the left eye EL of the observer and located adjacent to the left eye EL at, for example, either side of a headrest in the backseat. The right-eye projector 12R includes, similarly to the left-eye projector 12L, an exit pupil leveled with the right eye ER and located adj acent to the right eye ER. The observer views an image on the right-side pillar display device 10b in the incident direction of light entering the retroreflective screen 11. The exit pupil of the left-eye projector 12L may be located above the left eye of the observer in a vertically aligned manner with the left eye. The exit pupil of the right-eye projector 12R may be located above the right eye of the observer in a vertically aligned manner with the right eye. In other words, the exit pupils may be located on the ceiling of the vehicle 2. In this case, the diffuser 16 may have anisotropic diffusion capability in response to the positions of the exit pupils. With the exit pupils leveled with the eyes of the observer, the diffuser 16 may have higher lateral anisotropic diffusion capability. With the exit pupils located at positions higher than the eyes of the observer, the diffuser 16 may have higher vertical anisotropic diffusion capability.

The projection lens 14L in the left-eye projector 12L has the optical axis parallel to the optical axis of the projection lens 14R in the right-eye projector 12R. The right-side pillar display device 10b may be located perpendicularly to both the optical axes of the projection lenses 14L and 14R. The first image for the right eye ER and the second image for the left eye EL displayed on the right-side pillar display device 10b partially overlap each other.

The retroreflective screen 11 is retroreflective. The retroreflective screen 11 reflects almost all the incident light in the incident direction. The light projected through the projection lens 14L is reflected from the retroreflective screen 11 to the projection lens 14L. The light projected through the projection lens 14R is reflected from the retroreflective screen 11 to the projection lens 14R. The image light of the first image for the right eye ER and the image light of the second image for the left eye EL overlapping each other on the retroreflective screen 11 are thus separate from each other at the position of the observer. Each of the image light of the first image and the image light of the second image thus independently enters the corresponding right eye ER or left eye EL. The driver 5 as the observer can thus perceive a composite image of the image light of the first image and the image light of the second image as a three-dimensional parallax image.

In the present embodiment, to align outside scenes actually viewed through the windshield and the rear windshield with images projected on the dashboard display device 10a, the right-side pillar display device 10b, the left-side pillar display device 10c, and the backseat display device 10d located on the respective shielding portions 7, the positions of the viewpoints of the driver 5, or the positions of the left eye EL and the right eye ER, are obtained as coordinates (x, y, z) on orthogonal three axes of X, Y, and Z relative to the vehicle based on images captured with the interior camera 6 as the viewpoint detector. In the present embodiment, the direction of the length of the vehicle is referred to as X-direction, the direction of the width of the vehicle as Y-direction, and the direction of the height of the vehicle as Z-direction. With this structure, the actual viewpoints of the driver 5 are used as references. The actual scenes viewed through the windshield and the rear windshield can thus be perceived as being connected with the images projected on the dashboard display device 10a, the right-side pillar display device 10b, the left-side pillar display device 10c, and the backseat display device 10d located on the respective shielding portions 7. The outside scenes can be perceived as being seen through the transparent shielding portions without causing discomfort. With the positions of the viewpoints of the driver being detected, the images can be flexibly displayed as appropriate for the differences in the body shape and the posture of the driver. This can effectively reduce blind spots of the driver 5 without causing discomfort, allowing early detection of unsafe situations and supporting safe driving.

As illustrated in FIG. 3, the front exterior camera 3a is located at the front end of the vehicle 2, and the rear exterior camera 3b is located at the rear of the vehicle 2. These exterior cameras 3a and 3b may be charge-coupled device (CCD) cameras each including a fisheye lens. These exterior cameras 3a and 3b may also be other types of digital cameras, such as a digital camera including complementary metal-oxide semiconductor integrated circuits (CMOS ICs). The fisheye lens allows capturing of an entire front image in the traveling direction of the vehicle 2 with solid angles with references being the positions of the exterior cameras 3a and 3b on the vehicle 2. Multiple such exterior cameras 3a and 3b may be located. For example, a pair of exterior cameras 3a and 3b diagonally located at the front end and the rear end of the vehicle can clearly capture images of the rear of the vehicle in addition to the images of the front of the vehicle. The exterior cameras 3a and 3b may not be located outside the vehicle. The exterior cameras 3a and 3b may be located inward from the windshield or inside the hood of the vehicle. The exterior cameras 3a and 3b refer to cameras that capture images of the outside of the vehicle, such as backgrounds or vehicles travelling ahead of the vehicle.

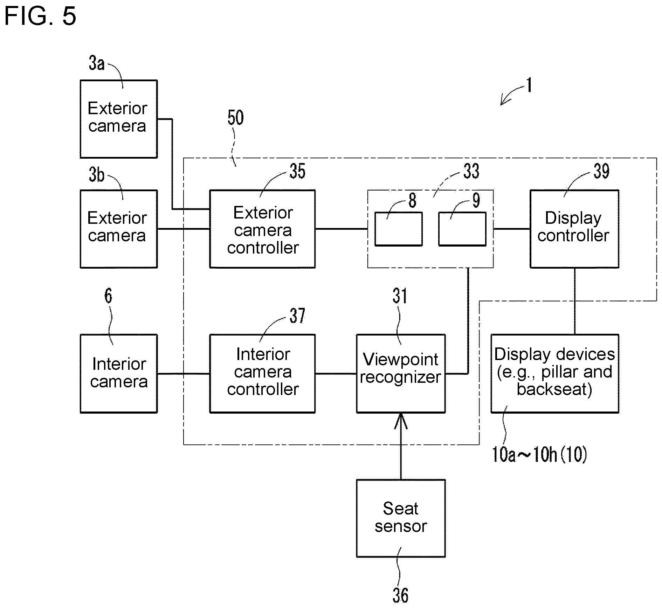

FIG. 5 is a block diagram of the image display device 1. Image data of images captured with the exterior cameras 3a and 3b is transmitted to an exterior camera controller 35. The exterior camera controller 35 is included in the image display device 1. The exterior cameras 3a and 3b include sensors to detect the outside environments (e.g., temperature and humidity). The exterior cameras 3a and 3b can adjust the temperatures of their optical systems and CCDs, and can remove fogging of their covers to obtain clear images. The exterior camera controller 35 receives analog image data from the exterior cameras 3a and 3b, converts the data to digital data, and transmits the data to an image data processor 33.

The display devices 10a to 10d (collectively referred to as the display devices 10 without letters a to d) inside the vehicle are located on the respective shielding portions 7 as the dashboard, the left side pillar, the right side pillar, and the backrest 23 in the backseat 22. The display devices 10 are each in conformance with the corresponding shielding portion 7 and located on the surface of the shielding portion 7 facing inside the vehicle. The images obtained by the exterior cameras 3a and 3b are projected onto these display devices 10. For example, a scene blocked by the right side pillar near the driver seat 4 is projected onto the retroreflective screen 11 on the right pillar. The right and left pillars are specific shielding portions. Displays to display images on the specific shielding portions are referred to as the right-side pillar display device 10b and the left-side pillar display device 10c. The dashboard display device 10a on the dashboard displays a projection image from the dashboard projector 25. The backseat display device 10d on the backseat 22 displays a projection image from the backseat projector 24.

The interior camera 6 is located inside the vehicle adjacent to, for example, the room mirror to capture images of the driver 5. The interior camera 6 may be a CCD camera. An interior camera controller 37 performs control to sharpen images obtained by the interior camera 6, to switch the interior camera 6 between the on and off states for capturing images inside the vehicle in response to an instruction from the driver 5, to receive detection data from, for example, an illuminance sensor to detect the luminous intensity inside the vehicle and a temperature sensor to detect the temperature inside the vehicle, and to cause the inside environment to be suitable for capturing sharp images inside the vehicle. The viewpoint detector includes the interior camera 6 and the interior camera controller 37.

The driver seat 4 includes a seat sensor 36 to detect the driver 5 being seated. The seat sensor 36 may be a known load sensor or a known limit switch. In response to the driver 5 being seated on the driver seat 4, the seat sensor 36 located in the driver seat 4 detects the driver 5 being seated. In response to the detection results being transmitted to a viewpoint recognizer 31, the viewpoint recognizer 31 starts measuring the viewpoint positions of the driver 5. The interior camera 6 and the viewpoint recognizer 31 extract, in the XYZ three-dimensional coordinate system, the positions of the viewpoints of the driver 5, or the positions of the pupils of the left eye EL and the right eye ER, from the images captured with the interior camera 6 with an image recognition process and then output the extracted positions of the pupils as coordinate values (x, y, z). A controller 50 includes the exterior camera controller 35, the image data processor 33, the interior camera controller 37, the viewpoint recognizer 31, and a display controller 39.

The controller 50 is connected to the components of the image display device 1, including the first image processor 8 and the second image processor 9, and controls the components. The controller 50 includes processors such as an electronic control unit (ECU) as hardware resources and computer-readable programs as software resources. The controller 50 may include one or more processors. The processors may include a general-purpose processor that reads a specific program to perform a specific function, and a processor dedicated to specific processing. The dedicated processor may include an application-specific integrated circuit (ASIC). The processors may include a programmable logic device (PLD). The PLD may include a field-programmable gate array (FPGA). The controller 50 may be a system on a chip (SoC) or a system in a package (SiP) in which one or more processors cooperate with other components. The controller 50 may include a storage, and store various items of information or programs to operate each component of the image display device 1. The storage may be, for example, a semiconductor memory. The storage may function as a storage area used temporarily during data processing of the controller 50.

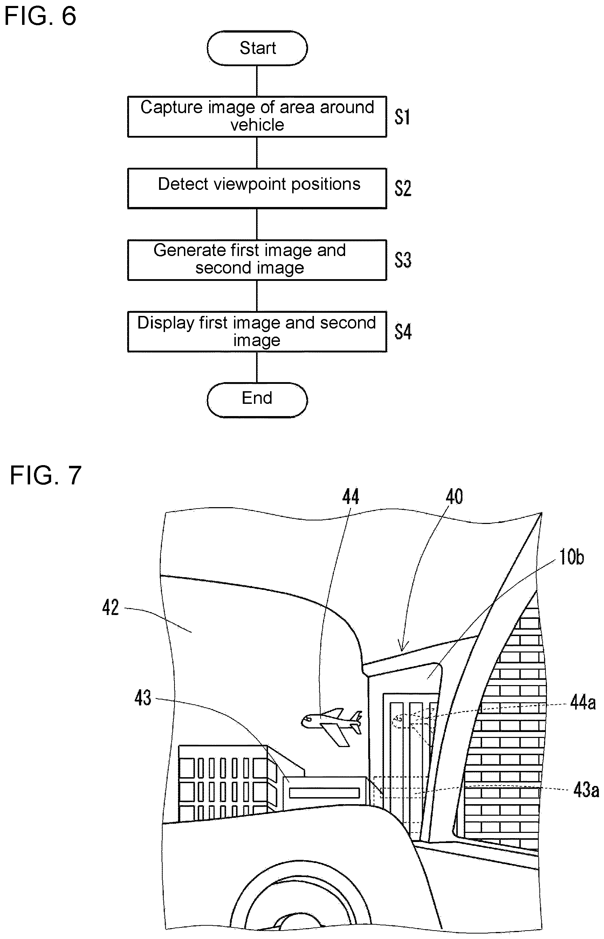

FIG. 6 is a flowchart of the operation of the controller 50. In response to the driver 5 being seated on the driver seat 4, the seat sensor 36 detects the driver 5 being seated on the driver seat 4. In step S1, in response to the driver 5 starting driving of a vehicle with, for example, a start button, the exterior camera controller 35 activates the exterior cameras 3a and 3b to start capturing outside images. In step S2, the interior camera controller 37 activates the viewpoint recognizer 31 and the interior camera 6 to start capturing images. The interior camera 6 and the viewpoint recognizer 31 extract, in the XYZ three-dimensional coordinate system, the positions of the viewpoints of the driver 5, or the positions of the pupils of the left eye EL and the right eye ER, from images captured with the interior camera 6 through an image recognition process and then output the extracted positions of the pupils as coordinate values (x, y, z). In step S3, the image data processor 33 cuts, from images captured with the exterior cameras 3a and 3b, images to be viewed at the viewpoint positions calculated by the viewpoint recognizer 31 and to be projected on the shielding portion 7. The image data processor 33 then generates a first image for the right eye ER and a second image for the left eye EL. In this state, the observer simultaneously views projected images of the first image and the second image partially overlapping each other. The observer integrally viewing the two different images can clearly perceive the images as a three-dimensional image. The backseat display device 10d may display, in response to the viewpoint recognizer 31 detecting the viewpoints of the driver 5 facing the rear of the vehicle, an image of a rear scene blocked by the backseat with the backseat projector 24.

After the image data processor 33 generates the first image and the second image, the display controller 39 causes, in step S4, an image, which is primarily invisible from the viewpoints of the driver 5, to be displayed on, for example, the right-side pillar display device 10b attached on the right side pillar as the shielding portion 7. In this state, the second image that is uniform monochromatic display data is displayed as a filter on the first image, thus not creating double images. The left eye EL thus cannot clearly recognize the first image for the right eye ER. When viewing a parallax image including the first image and the second image partially overlapping each other, the right eye ER and the left eye EL mainly view the first image without the second image being emphasized. Thus, the actual scenes viewed through the windshield and the right window glass adjacent to the right side pillar and the image displayed on the right-side pillar display device 10b are less likely to be deviated from each other. This allows the driver 5 to perceive the right pillar as being transparent, reducing blind spots and improving the support for safe driving.

Such monochromatization of the second image is performed for both the left and right side pillars being display targets by the image data processor 33. The driver 5 can thus also perceive the left side pillar as being transparent. The monochromatization of the second image may be performed for narrow shielding portions such as pillars located in the lateral direction of the driver.

The mechanism for reducing double images is now described in detail. Without a monochromatic display, the left eye EL easily views the first image. The first image and the actual scenes viewed through the windshield and the right window have large differences from each other. The left eye EL thus perceives the first image and the actual scenes as double images. With a monochromatic second image as a white image, the left eye EL views the first image on which the second image overlap, or covered with a white filter. The first image is thus less likely to be viewed with the left eye EL. The left eye EL being less likely to view the display of the first image can clearly perceive images of the actual scenes viewed through the windows, thus avoiding double images.

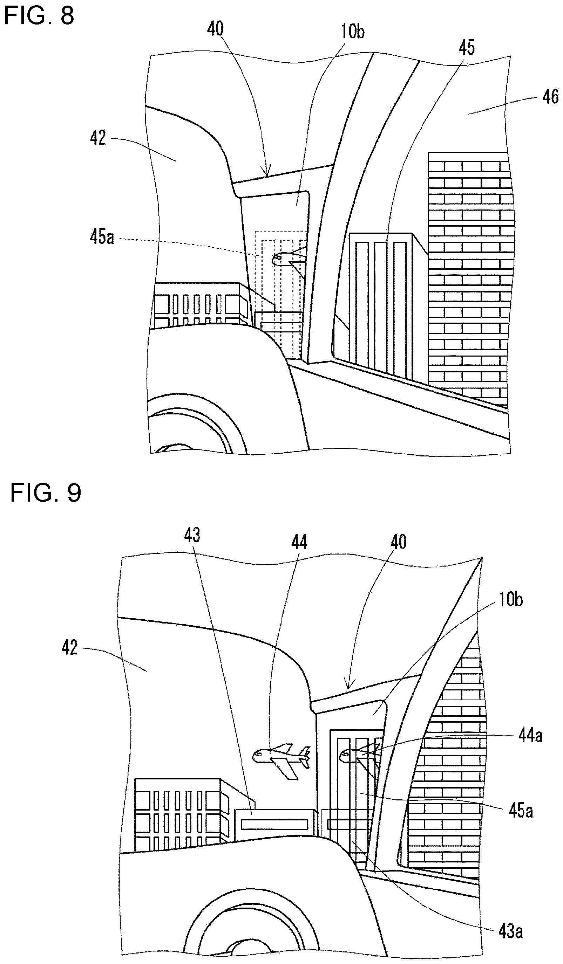

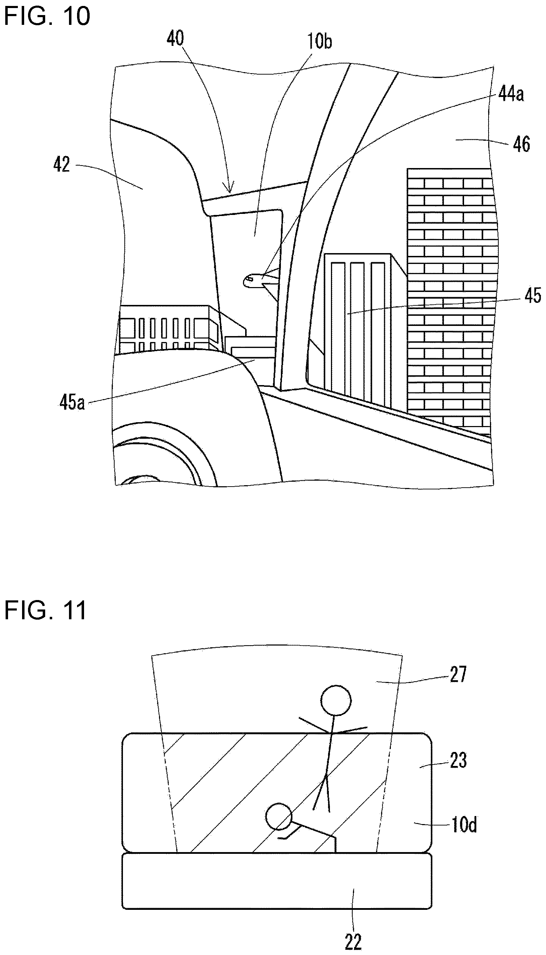

FIG. 7 is a diagram of a known example display of a display image on the shielding portion viewed with the left eye EL. FIG. 8 is a diagram of a known example display of a display image on the shielding portion viewed with the right eye ER. FIG. 9 is a diagram of a comparative example display of a parallax image including a second image as a non-monochromatic image being displayed on the shielding portion 7. FIG. 10 is a diagram of an example display of a parallax image including the second image as a monochromatic image being displayed on the shielding portion by the image display device 1 according to the present embodiment. FIG. 11 is a schematic diagram of the backseat display device 10d being attached.

To check displays displayed by the image display device 1 according to one or more embodiments of the present disclosure, the inventors attach the right-side pillar display device 10b on the right side pillar 40 as the specific shielding portion 7 of the vehicle 2 and cause the right-side pillar display device 10b to display the first image corresponding to the right eye ER and an unprocessed second image corresponding to the left eye EL as illustrated in FIG. 7. In this state, actual scenes of a building 43 and an object 44 viewed through a windshield 42 are also viewed, with the left eye EL, on the pillar 40 as a building 43a and an object 44a, causing crosstalk. With the buildings 43 and 43a and the objects 44 and 44a perceived as double images, the actual scenes are perceived as being disconnected. The image displayed on the right-side pillar display device 10b thus cannot be perceived as a connected transmissive image. In FIG. 8 as well, a building 45 viewed through a right window 46 and a building 45a are perceived, with the right eye ER, as double images. As illustrated in FIG. 9, with the second image being displayed as non-monochromatic data without being processed, an image blocked by the right side pillar 40 is perceived as, due to the crosstalk, an image including the building 43 and the object 44 through the windshield 42, as in FIG. 8. With the second image as a uniform monochromatic image, or particularly as a white or gray image, the displayed image can be perceived as a connected image including the building 43a and the object 44a as illustrated in FIG. 10.

In the image display device according to the present embodiment, the second image processor 9 displays the second image as a uniform white image, or a uniform image with an entirely white display surface, together with the first image on the right-side pillar display device 10b on the right pillar as the specific shielding portion 7. Thus, when a composite image including the first image and the second image is viewed, the first image and the second image are not perceived independently on a small shielding portion 7 such as a pillar. The composite image is thus less likely to be perceived as being disconnected from the outside scenes viewed through light-transmissive areas such as the windshield adjacent to the pillar as the specific shielding portion, allowing the right side pillar to be perceived as being transparent.

The specific shielding portions 7 in the vehicle include the above right side pillar. The pillars are located across the driver 5. In a vehicle with a steering wheel on the right, an image for the right eye closer to the right pillar, or the pillar closer to the driver 5, to be projected on the right pillar may be the first image data, and an image for the left eye farther from the right pillar may be uniform monochromatic display data. This can reduce double images viewed on the specific shielding portion 7, allowing the outside scenes to be viewed with less discomfort. The right pillar is mainly described above. For the left pillar, an image for the left eye may be the first image and an image for the right eye may be uniform data in a monochromatic color.

Images to be projected on the dashboard display device 10a are image data for the right eye and image data for the left eye that have been obtained from the front exterior camera 3a and subjected to image processing. The images are three-dimensionally displayed on the dashboard, allowing the outside scene to be projected without causing discomfort. In response to the viewpoint recognizer 31 detecting the driver 5 viewing rearward during driving backward to, for example, park the vehicle 2 in a parking space, the display controller 39 cuts image data of a first image and a second image for the backseat display device 10d from image data captured with the rear exterior camera 3b at the rear of the vehicle and causes the backseat projector 24 to project the cut image data onto the backseat display device 10d. The image data can thus be three-dimensionally displayed on the backseat, allowing the outside scene to be projected without causing discomfort and thus supporting safe driving.

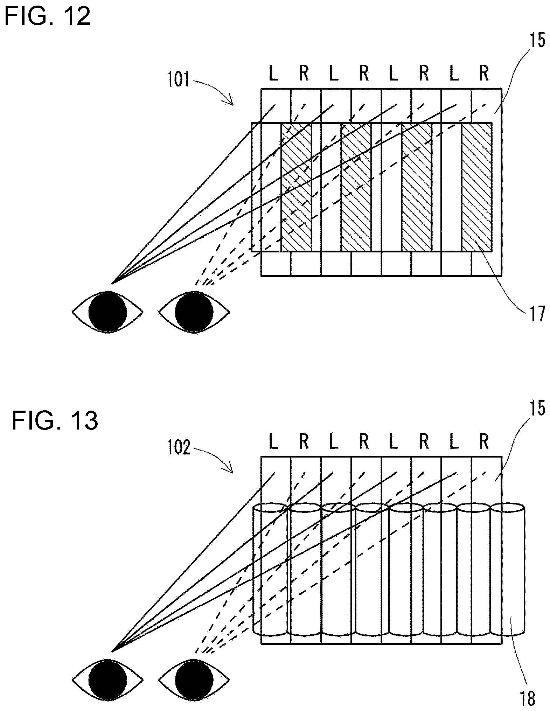

FIG. 12 is a schematic diagram of a display device 101 including a parallax barrier 17 according to another embodiment. In the other embodiment of the present disclosure, the above display devices 10a to 10d including the projectors 12, 24, and 25 and the retroreflective screen 11 are replaced with electrooptical display panels each including a display on the shielding portion 7 and a parallax barrier. The display in each display device according to the present embodiment may be, for example, a flexible sheet display including self-luminous elements such as organic electroluminescent (EL) elements or micro-LEDs mounted on a flexible board. These display devices 10a to 10d do not include the dashboard projector 25, the left-side pillar projector 12L, the right-side pillar projector 12R, and the backseat projector 24. The display controller 39 can transmit image signals wirelessly or with wires and can display the image signals on the dashboard display device 10a, the right-side pillar display device 10b, the left-side pillar display device 10c, and the backseat display device 10d. The image signals may be wirelessly transmitted to the display devices 10a to 10d with a communication system such as an infrared communication system, a wireless local area network (LAN), or Bluetooth (registered trademark). The display controller 39 causes these display devices 10a to 10d each to display the respective images. Images obtained by the front exterior camera 3a are projected onto the display devices 10a, 10b, and 10c. For example, a scene blocked by the dashboard is projected onto the dashboard display device 10a. A scene blocked by the right side pillar closer to the driver seat 4 is projected onto the right-side pillar display device 10b. A scene blocked by the left side pillar is projected onto the left-side pillar display device 10c. An image blocked by the backseat among images obtained by the rear exterior camera 3b is projected onto the backseat display device 10d.

The display devices 10a to 10d each include a parallax barrier located closer to the display surface of a display 15 to define the direction of the image light. The parallax barrier may be a liquid crystal shutter or an optical film including transmissive portions that define the transmission direction of the image light in an individual set of multiple subpixels. In the present embodiment, the image display device may include the display controller 39 to cause the display devices 10a to 10d to display parallax images including a first image for the right eye and a second image for the left eye based on the viewpoint position information from the viewpoint recognizer 31. In particular, uniform monochromatic images, for example, white images, are provided as second images to the display devices 10b and 10c on the pillars as the specific shielding portions. This allows the shielding portions to be perceived as being transparent. The first image and the second image provided to the display device 10a on the shielding portion 7 as the dashboard are image data for the right eye and image data for the left eye that have been obtained from the exterior cameras 3a and 3b and subjected to image processing. The images are three-dimensionally displayed on the dashboard, allowing the outside scene to be projected without causing discomfort. The structure according to the present embodiment does not include the projectors 12, 24, and 25. The display devices 10 are located on the shielding portions 7.

FIG. 13 is a schematic diagram of a display device 102 including a lenticular lens 18 according to another embodiment. In still another embodiment of the present disclosure, the above display devices 10 including the projectors 12, 24, and 25 and the display devices 10a to 10d including the screen onto which images are projected are replaced with display devices 10 each including a display and a lenticular lens. The display devices 10a to 10d are located on the respective shielding portions 7. The display device 10a is located on the dashboard. The right-side pillar display device 10b is located on the right side pillar. The left-side pillar display device 10c is located on the left side pillar. The backseat display device 10d is located on the backseat. The displays may each be, for example, a flexible sheet display including self-luminous elements such as organic EL elements or micro-LEDs mounted on a flexible board as appropriate. The display controller 39 causes these display devices 10a to 10d to display the respective images. Images obtained by the front exterior camera 3a are projected onto the display devices 10a to 10c. An image obtained by the rear exterior camera 3b is projected onto the display device 10d. For example, an actual scene blocked by, for example, the dashboard in the vehicle is projected onto the dashboard display device 10a. An actual scene blocked by the right side pillar closer to the driver seat 4 is projected onto the right-side pillar display device 10b. An actual scene of the rear blocked by, for example, the backseat is projected onto the backseat display device 10d.

The above display devices 10a to 10d located on the respective shielding portions 7 may be electrooptical display panels each including a lenticular lens on the display surface of the display 15. The lenticular lens deflects image light of the first image emitted through the display surface toward one of the left eye EL or the right eye ER and deflects image light of the second image emitted through the display surface toward the other of the left eye EL or the right eye ER. This allows the observer to perceive a parallax image. Uniform monochromatic images, for example, white images, are provided as second images in particular to the right-side pillar display device 10b and the left-side pillar display device 10c on the pillars as the specific shielding portions. This allows the shielding portions to be perceived as being transparent. The first image and the second image provided to the display device 10a on the shielding portion 7 as the dashboard are image data for the right eye and image data for the left eye that have been obtained from the exterior cameras 3a and 3b and subjected to image processing. The images are three-dimensionally displayed on the dashboard, allowing the outside scene to be projected without causing discomfort. The structure according to the present embodiment does not include the projectors 12, 24, and 25. The display devices 10a to 10d on the shielding portions 7 display self-luminous images.

In other embodiments of the present disclosure, the uniform monochromatic display data may be uniform achromatic image data in a gray color in place of the above image data, or a uniform white image.

The present disclosure may be implemented in the following forms.

In one or more embodiments of the present disclosure, an image display device includes an imager, a first image processor, a second image processor, and an image display. The imager captures an image of an area around a vehicle to obtain image data and outputs the image data. The first image processor generates, based on a portion of the image data about an area corresponding to a shielding portion to block a view of an observer seated on a seat of the vehicle, first image data of a first image of the area corresponding to the shielding portion. The first image data is viewable with one of a left eye or a right eye. The second image processor generates, based on the portion of the image data about the area corresponding to the shielding portion, second image data of a second image of the area corresponding to the shielding portion. The second image data is viewable with the other of the left eye or the right eye. The image display is installable on the vehicle to display a parallax image including the first image and the second image on the shielding portion. The second image data is uniform monochromatic display data for a specific shielding portion of the shielding portion.

In the image display device according to one or more embodiments of the present disclosure, uniform monochromatic display data is displayed as a second image, by the second image processor, together with a first image on the specific shielding portion among the shielding portions. Thus, when a parallax image including the first image and the second image is viewed, the first image and the second image are not perceived independently on a small shielding portion such as a pillar. The parallax image is thus less likely to be perceived as being disconnected from the outside scenes viewed through light transmissive areas such as the windshield adjacent to the shielding portion, allowing the shielding portion to be perceived as being transparent.

Although embodiments of the present disclosure have been described in detail, the present disclosure is not limited to the embodiments described above, and may be changed or varied in various manners without departing from the spirit and scope of the present disclosure. The components described in the above embodiments may be entirely or partially combined as appropriate unless any contradiction arises.

### REFERENCE SIGNS

1 image display device
2 vehicle
3a, 3b exterior camera
4 driver seat
5 observer (driver)
6 interior camera
7 shielding portion
8 first image processor
9 second image processor
10 display device
10a to 10d display device
11 retroreflective screen
11a glass bead
11b reflective film
12 right-side pillar projector
12L left-eye projector
12Rright-eye projector
13L, 13R liquid crystal display device
15 display
16 diffuser
17 parallax barrier
18 lenticular lens
24 backseat projector
25 dashboard projector
33 image data processor
35 exterior camera controller
37 interior camera controller
39 display controller
50 controller
EL left eye
ER right eye

## Claims

1. An image display device, comprising:
an imager configured to capture an image of an area around a vehicle to obtain image data and output the image data;
a first image processor configured to generate, based on a portion of the image data about an area corresponding to a shielding portion to block a view of an observer seated on a seat of the vehicle, first image data of a first image of the area corresponding to the shielding portion, the first image data being viewable with one of a left eye or a right eye;
a second image processor configured to generate, based on the portion of the image data about the area corresponding to the shielding portion, second image data of a second image of the area corresponding to the shielding portion, the second image data being viewable with the other of the left eye or the right eye; and
an image display installable on the vehicle to display an image including the first image and the second image on the shielding portion,
wherein the second image data is uniform monochromatic display data for a specific shielding portion of the shielding portion.

2. The image display device according to claim 1, wherein
the specific shielding portion is a pillar, and the seat is a driver seat.

3. The image display device according to claim 1 or claim 2, wherein
the image display further includes
a retroreflective screen located on the shielding portion,
a first image projector configured to project the first image onto the retroreflective screen, and
a second image projector configured to project the second image onto the retroreflective screen.

4. The image display device according to any one of claims 1 to 3, wherein
the image display further includes a diffuser located adjacent to the retroreflective screen between the retroreflective screen and an image projector.

5. The image display device according to any one of claims 1 to 4, wherein
the uniform monochromatic display data is in an achromatic color being white or gray.

6. The image display device according to claim 2, wherein
the first image corresponding to the pillar is viewed with an eye closer to the pillar, and the uniform monochromatic display data as an image is viewed with an eye farther from the pillar.

7. The image display device according to any one of claims 1 to 6, wherein
with the shielding portion including a dashboard, the image display device provides the first image data and the second image data having parallax with the first image data to the dashboard, and provides the first image data and the uniform monochromatic display data to the specific shielding portion.

8. The image display device according to any one of claims 1 to 7, further comprising:
a viewpoint detector configured to detect positions of viewpoints of the observer seated on the seat of the vehicle and to output viewpoint position information indicating the positions of the detected viewpoints as space coordinates.

9. The image display device according to claim 1, wherein
the image display further includes
an electrooptical display panel located on the shielding portion,
an optical element configured to define a traveling direction of image light emitted from the electrooptical display panel, and
a controller configured to cause the electrooptical display panel to display, based on viewpoint position information, a parallax image including the first image and the second image.

10. The image display device according to claim 1, wherein
the image display further includes
an electrooptical display panel located on the shielding portion, and
a lenticular lens located on the electrooptical display panel to deflect, based on viewpoint position information, image light of the first image emitted from the electrooptical display panel toward one of the right eye or the left eye and to deflect image light of the second image emitted from the electrooptical display panel toward the other of the right eye or the left eye.
